(19) Europäisches Patentamt / European Patent Office / Office européen des brevets

(11) **EP 3 173 833 A1**

(12) **EUROPEAN PATENT APPLICATION**

(43) Date of publication:
**31.05.2017 Bulletin 2017/22**

(51) Int Cl.:
**G02B 6/30** (2006.01)  **G02B 6/34** (2006.01)
**G02B 6/124** (2006.01)  **H04B 10/40** (2013.01)
G02B 6/12 (2006.01)  G02B 6/126 (2006.01)
G02B 6/42 (2006.01)

(21) Application number: **16199715.0**

(22) Date of filing: **21.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **30.11.2015  US 201562261246 P
17.11.2016  US 201615354655**

(71) Applicant: **Google Inc.
Mountain View, CA 94043 (US)**

(72) Inventors:
• **Verslegers, Lieven
Mountain View, CA 94043 (US)**
• **Urata, Ryohei
Mountain View, CA 94043 (US)**
• **LIU, Hong
Mountain View, CA 94043 (US)**

(74) Representative: **Betten & Resch
Patent- und Rechtsanwälte PartGmbB
Maximiliansplatz 14
80333 München (DE)**

(54) **PHOTONIC CHIP OPTICAL TRANSCEIVERS**

(57)     This disclosure provides systems, methods, and apparatus for a photonic chip. The photonic chip includes one or more electronic components in addition to one or more optical components. Grating couplers can be utilized for coupling light incident from an optical fibers or lasers with the optical components on the photonic chip. The grating couplers can be designed to have a wide bandwidth to support applications such as wave division multiplexing (WDM). The wide bandwidth can be achieved by reducing a mode field diameter (MFD) of the light beams incident on the grating couplers, and selecting a beam size of the optical couplers to be substantially equal to MFD. The bandwidth can be further improved by using thin silicon layer for fabricating the ridges of the grating coupler. Grating couplers with relatively large beam sizes can be utilized for coupling light output by lasers with the optical components on the chip.

FIGURE 1A

**Description**

**CROSS-REFERENCE TO RELATED APPLICATIONS**

The present application claims priority to U.S. Provisional Patent Application No. 62/261,246, entitled "PHOTONIC CHIP OPTICAL TRANSCEIVERS", filed November 30, 2015, and U.S. patent application 15/354,655, entitled "PHOTONIC CHIP OPTICAL TRANSCEIVERS", filed on November 17, 2016, the entirety of which is hereby incorporated by reference.

**TECHNICAL FIELD**

This disclosure relates to the field of optical communication, and in particular to optical couplers.

**DESCRIPTION OF THE RELATED TECHNOLOGY**

Silicon photonics, which include manufactured optical, electrical and optoelectronic components on the same chip, can provide low-cost, low-power, high-speed optical solutions for datacom, telecommunications and in particular optical communications. By integrating optical electrical and optoelectronic components on the same substrate, scaling of transceiver channels and transmission speeds can be achieved.

**SUMMARY**

At least one aspect is directed to a photonic chip. The photonic chip includes at least one optical component, a waveguide, a grating coupler, and an optical fiber coupler. One end of the waveguide is coupled to the at least one optical component. The grating coupler has a horn section with a narrow end and a broad end, wherein the narrow end is coupled to a second end of the waveguide and the broad end includes a grating portion having a plurality of ridges, the horn section having a beam size defined by a dimension in a plane of the horn section that is substantially perpendicular to a longitudinal axis of the horn section at a point along a length of the grating along the longitudinal axis. The optical fiber coupler is configured to direct a beam of light on the grating portion of the grating coupler at an angle in relation to a normal with respect to the plane of the grating coupler, wherein a mode field diameter of the beam of light is substantially equal to the beam size.

In some implementations, the beam size is between about 3-7 $\mu$m. In some implementations, the beam size is about 5 $\mu$m.

In some implementations, the plurality of ridges are separated by trenches, and the thickness of each of the plurality of ridges along an axis normal to the plane of the grating coupler is about 20-100 nm.

In some implementations, the plurality of ridges are separated by trenches, and the thickness of each of the plurality of ridges along an axis normal to the plane of the grating coupler is about 50 nm.

In some implementations, the horn section is a first horn section, the waveguide is a first waveguide, and the grating coupler is a two-dimensional grating coupler including a second horn section with a second narrow end coupled to a second waveguide. The two-dimensional grating coupler is configured to receive the beam of light from the optical fiber coupler, the beam of light comprising a first optical signal having a first polarization and a second optical signal having a second polarization different from the first polarization. The two-dimensional grating coupler is configured to direct the first optical signal to the first waveguide, and direct the second optical signal to the second waveguide.

In some implementations, the at least one optical component comprises one or more of an optical multiplexer, an optical demultiplexer, a modulator, or a photodetector.

At least one aspect is directed to a photonic chip. The photonic chip can include at least one optical component, a waveguide, a grating coupler, and a laser source coupler. One end of the waveguide is coupled to the at least one optical component. The grating coupler has a horn section with a narrow end and a broad end, wherein the narrow end is coupled to a second end of the waveguide and the broad end includes a grating portion having a plurality of ridges, the horn section having a beam size defined by a dimension in a plane of the horn section that is substantially perpendicular to a longitudinal axis of the horn section at a point along a length of the grating coupler along the longitudinal axis. The laser source coupler is configured to direct a beam of light on the grating portion of the grating coupler at an angle in relation to a normal with respect to the plane of the grating coupler, wherein a mode field diameter of the beam of light is substantially equal to the beam size.

In some implementations, the beam size is greater than about 15 $\mu$m. In some implementations, the beam size is between about 20-25 $\mu$m.

In some implementations, the plurality of ridges are separated by trenches, and the thickness of each of the plurality of ridges along an axis normal to the plane of the grating coupler is about 20-100 nm.

In some implementations, the plurality of ridges are separated by trenches, and the thickness of each of the plurality of ridges along an axis normal to the plane of the grating coupler is about 50 nm.

In some implementations, the at least one optical component comprises one or more of an optical multiplexer, an optical demultiplexer, a modulator, or a photodetector.

In some implementations, the laser source coupler comprises magnifying optics configured to increase the mode field diameter of the beam of light before it is incident on the grating coupler.

At least one aspect is directed to an optical transceiver. The optical transceiver includes a first photonic chip section and a second photonic chip section. The first photonic chip section includes a first optical component, a first waveguide having a first end coupled to the first optical component, a first grating coupler, and an optical fiber coupler. The first grating coupler has a first horn section with a first narrow end and a first broad end, wherein the first narrow end is coupled to a second end of the first waveguide and the first broad end includes a first grating portion having a first plurality of ridges, the first horn section having a first beam size defined by a dimension in a plane of the first horn section that is substantially perpendicular to a longitudinal axis of the first horn section at a point along a length of the first grating coupler along the longitudinal axis of the first horn section. The optical fiber coupler is configured to direct a first beam of light on the grating portion of the first grating coupler at an angle in relation to a normal with respect to the plane of the first grating coupler, wherein a mode field diameter of the first beam of light is substantially equal to the first beam size. The second photonic chip section includes a second optical component, a second waveguide having a first end coupled to the second optical component, a second grating coupler, and a laser source coupler. The second grating coupler has a second horn section with a second narrow end and a second broad end, wherein the second narrow end is coupled to a second end of the second waveguide and the second broad end includes a second grating portion having a second plurality of ridges, the second horn section having a second beam size defined by a dimension in a plane of the second horn section that is substantially perpendicular to a longitudinal axis of the second horn section at a point along a length of the grating coupler along the longitudinal axis of the second horn section. The laser source coupler is configured to direct a second beam of light on the grating portion of the second grating coupler at an angle in relation to a normal with respect to the plane of the second grating coupler, wherein a mode field diameter of the second beam of light is substantially equal to the second beam size.

In some implementations, the laser source includes one or more lasers operative to produce outputs having wavelengths of one or more of 1271 nm, 1291 nm, 1310, 1311 run, 1331 nm, or 1550 nm.

## BRIEF DESCRIPTION OF THE DRAWINGS

Figure 1A shows a schematic of an example photonic chip for use in optical communications.

Figure 1 B shows a schematic of the example photonic chip shown in Figure 1 A coupled to an optical coupler and a laser source coupler.

Figures 2A and 2B show schematics of the optical components within a first optical fiber coupler and a second optical fiber coupler, respectively.

Figures 3A and 3B show top views of example grating couplers.

Figures 4A and 4B show cross-sectional views of photonic chips across example gratings that can be utilized in grating couplers.

Figure 5 shows a block diagram of an example transceiver.

Figure 6 shows a top view of an example two-dimensional grating coupler.

Like reference numbers and designations in the various drawings indicate like elements.

## DETAILED DESCRIPTION

The various concepts introduced above and discussed in greater detail below may be implemented in any of numerous ways, as the described concepts are not limited to any particular manner of implementation. Examples of specific implementations and applications are provided primarily for illustrative purposes.

One of the key challenges in silicon photonics technology is to efficiently couple light from a laser or an optical fiber into and out of a photonic chip. One approach to coupling light between the photonic chip and an optical fiber or a laser is to use a grating coupler. However, as grating couplers are resonant devices, they typically have a limited optical bandwidth. As a result, the grating couplers exhibit increasing losses in coupling light of wavelengths with increasing difference from the resonant wavelength of the grating coupler. One approach to scaling of silicon photonic transceivers speeds includes wave-division-multiplexing (WDM), which multiplexes light beams with a wide range of wavelengths, and therefore require optical components with bandwidths that can accommodate the wide range of wavelengths. However, typical grating couplers with narrow bandwidths are not well suited for WDM.

Further, variations in semiconductor manufacturing processes used for fabricating the grating couplers can result in variations in the performance of the grating couplers, in particular, the resonant frequency of the grating couplers. These variations can aggravate the impact of an already limited bandwidth of the grating couplers with WDM applications. Some typical solutions include space division multiplexing, using a single wavelength, multiple grating couplers, and parallel single mode fibers. However, such solutions have high fiber cabling and connector costs, in addition to fiber coupling losses in the optical signals. In some cases, these solutions require connectors and couplers that are oriented vertically with respect to the surface of the chip, resulting in bulky packaging.

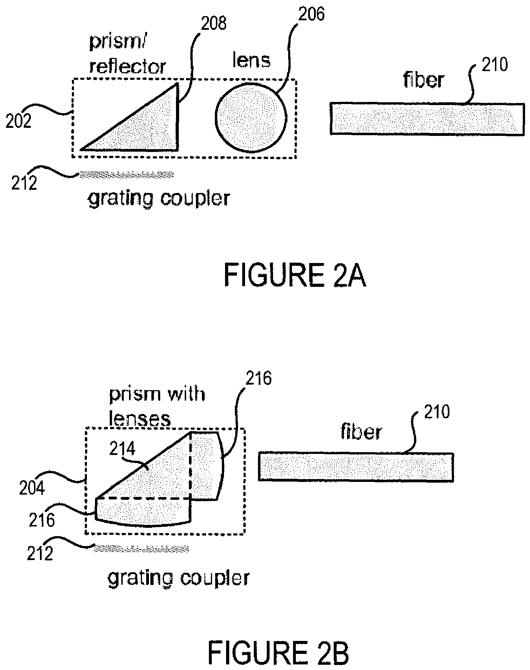

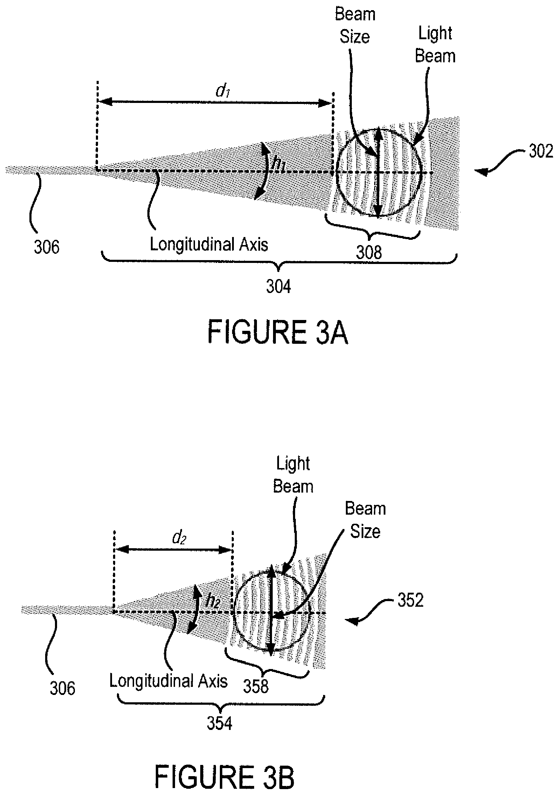

Aspects of the following discussion relate to wide bandwidth grating couplers. These wide-bandwidth grating couplers can be readily utilized in WDM applications. In particular, the bandwidth of the grating couplers can be improved by selecting the dimensions of the grating couplers that are suitable for small mode field diameter of the incident light beams (such as a mode field diameter of less than about 10 $\mu$m, for example, between about 4-6 $\mu$m, or about 5 $\mu$m). To that end, optical components for appropriately reducing the mode field diameter of the light beams received from an optical fiber are discussed in relation to Figures 2A and 2B. Further, grating couplers with wide bandwidth utilized for coupling small mode field diameter light beams are discussed in relation to figures 3A and 3B. In some implementations, selecting the thickness of the silicon layer in which the gratings are fabricated can improve the bandwidth of the grating coupler. One such example is discussed below in relation to 4B.

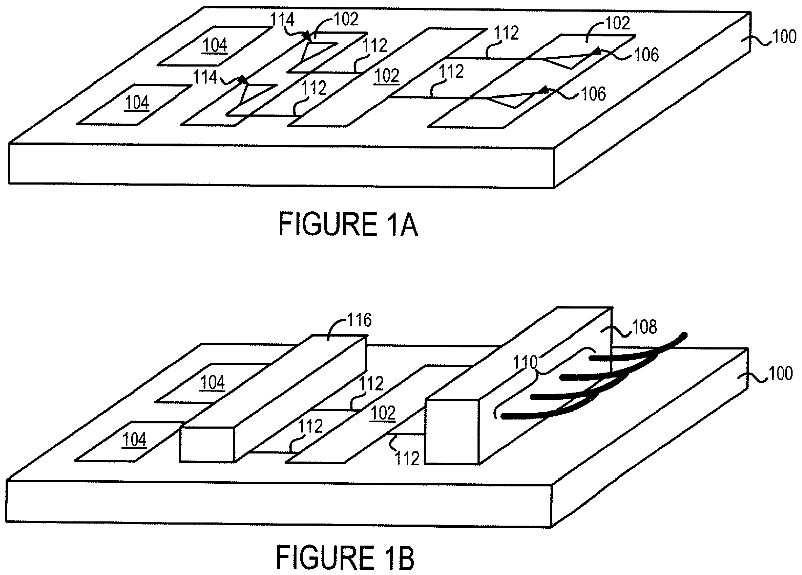

Figure 1 A shows a schematic of an example photonic chip 100 for use in optical communications. In particular, the photonic chip 100 can be utilized for processing both optical and electronic signals. The photonic chip 100 can include one or more optical components 102 and one or more electronic components 104. In some implementations, the optical/optoelectronic components 102 can include, without limitation, photo-detectors, lasers, waveguides, splitters, filters, lenses, reflectors, polarizers, retarders, optical and/or electro-optical modulators, amplifiers, attenuators, etc. The optical components can be utilized for processing optical signals received over optical fibers or for processing optical signals generated on the photonic chip 100. In some implementations, the photonic chip 100 also can include a first set of grating couplers 106 and a second set of grating couplers 114. The first and second set of grating couplers 106 and 114 allow the coupling of optical signals between the optical components 102 on the photonic chip 100 and off-chip optical fibers or lasers. In some implementations, light beams can be guided between the first grating couplers 106 or the second grating couplers 114 and other optical components 106 using waveguides 112. The first grating couplers 106 are discussed further below in relation to Figures 3A-3B.

In some implementations, the electronic components 104 can include analog and digital electronic components such as, without limitations, voltage and/or current amplifiers, transconductance amplifiers, filters, digital signal processors, analog-to-digital converters, digital-to-analog converters, etc. The electronic components 104 and the optical components 102 can be utilized to implement various electro-optical functional blocks such as, without limitation, transmitters, receivers, switches, modulators, repeaters, amplifiers, etc. While Figure 1A shows optical, electro-optical, and electronic components fabricated on the same chip, in some implementations, these components can be fabricated on separate chips that are interconnected via electrical interconnects (e.g., wire bonds, copper pillars, etc.) and/or optical interconnects (e.g., waveguides, optical fibers, etc.).

Figure 1B shows a schematic of the example photonic chip 100 shown in Figure 1A coupled to an optical fiber coupler 108 and a laser source coupler 116. In particular, the optical fiber coupler 108 can be utilized as an interface between the photonic chip 100 and one or more optical fibers 110, while the laser source coupler 116 can be utilized as an interface between the photonic chip 100 and one or more laser sources (not shown). In some implementations, the laser source coupler 116 also can house the one or more laser sources. Alternatively, multiple first laser source couplers 116 can be used, one per laser source. The laser sources can include laser sources of any wavelength of light appropriate for optical communications. In some implementations, the laser sources can generate light at, for example and without limitation, 1271 nm, 1291 nm, 1311 nm, 1331 nm, or 1550 nm. The optical fiber coupler 108 can be generally positioned over the first set of grating couplers 106 (Figure 1) on the photonic chip 100. The optical fiber coupler 108 in conjunction with the first set of grating couplers 106 can facilitate bi-directional optical signal communication between the optical fibers 110 and the optical components 102 on the photonic chip 100. The optical fiber coupler 108 can include a housing for enclosing one or more optical components, such as lenses, mirrors, prisms, polarizers, etc. The housing can also provide specific placement and orientations of the optical components such that the light can be received from and sent to the optical fibers 110 and the grating couplers 106 at desired angles. In some implementations, the placement and orientation of one or more optical components can be adjustable.

The laser source coupler 116 can be positioned over the second set of grating couplers 114 (Figure 1A) on the photonic chip 100. The laser source coupler 116 can facilitate transmission of optical signals generated from the laser onto the photonic chip 100. Similar to the optical fiber coupler 108, the laser source coupler 116 can include a housing for enclosing one or more optical components. The housing can also provide specific placement and orientations of the optical components such that the light generated by the one or more lasers can be communicated to the optical components 102 on the photonic chip 100.

Figures 2A and 2B show schematics of the optical components within a first optical fiber coupler 202 and a second optical fiber coupler 204, respectively. In particular, the first or second optical fiber couplers 202 and 204 can be utilized to implement the optical fiber coupler 108 shown in Figure 1 B. The first optical fiber coupler 202 can include a lens 206 and a prism/reflector 208. The lens 202 and the prism/reflector 208 can be arranged in a manner such that light emanating from the optical fiber 210 can be focused and reflected onto a grating coupler 212 (such as a grating coupler 106 shown in Figure 1A) with the desired orientation. The second optical fiber coupler 204 shown in Figure 2B can include a prism 214 with lenses 216. The prism 214 and the lenses 216 are arranged in a manner such that light emanating from the optical fiber 210 can be focused and reflected onto a grating coupler 212. In some implementations, additional components such as reflectors, mirrors, polarizers, and lenses may be utilized in the first and the second fiber optic couplers 202 and 204. In some implementations, position and orientation of one or more of the optical components within the first and the second fiber optic couplers 202 and 204 can be adjustable.

In some implementations, the first and the second fiber optic couplers 202 and 204 can ensure that the light incident on the grating coupler 212 is within a desired angle with respect to a normal to the plane of the grating coupler, or the plane of incidence of the light is at a desired angle with respect to either or both of the plane of the grating coupler 212 or a longitudinal axis of the grating coupler 212. In some implementations, the first and second fiber optic couplers 202 and 204 can adjust a mode field diameter (MFD) of the light incident on the grating coupler 212. As used herein, the MFD is defined as a diameter of the light beam where the intensity of the light beam is about $1/e^2$ times the maximum intensity of the light beam. For example, the first and the second fiber optic couplers 202 and 204 can increase or decrease the MFD of the light incident on the grating coupler 212 with respect to that of the light emanating from the optical fiber 210. In some implementations, the first and the second fiber optic couplers 202 and 204 can be utilized for directing light from the photonic chip to the optical fiber 210. For example, the first and the second optical fiber couplers 202 and 204 can receive light emanating from the respective grating coupler 212 and reflect the light into the respective optical fiber 210. The positions and orientations of the optical components can be arranged such that the light is incident on the optical fiber with the desired angle and mode field diameter. In some implementations, the various optical components utilized in the fiber optic couplers 202 and 204 can be coated with anti-reflective coating to reduce or mitigate the effects of reflections on the quality of the light beam. Alternatively, an optical isolator can be used to reduce reflections.

Figures 3A and 3B show top views of example grating couplers. In particular, Figure 3A shows a first grating coupler 302 and Figure 3B shows a second grating coupler 352 having relatively wide bandwidth. In some implementations, the first grating coupler 302 and the second grating coupler 352 can be made of silicon, silicon nitride, silicon oxynitride, polysilicon, or a combination of these materials. In some implementations, the first grating coupler 302 or the second grating coupler 352 can be utilized to implement one or more of the first set of grating couplers 106 shown in Figure 1A, for coupling the photonic chip 100 with optical fibers 110. In some implementations, the grating couplers shown in Figures 3A and 3B can be utilized for implementing the grating couplers 212 shown in Figures 2A and 2B.

Referring to Figure 3A, the first grating coupler 302 includes a first horn section 304, having a narrow end and a broad end. A waveguide 306 can be coupled to the narrow end of the first horn section 304, while a first grating 308 can be formed at the broad end of the first horn section 304. The horn shape allows coupling of an incident light having a relatively larger MFD with the waveguide 306 having a relatively narrow mode. The first grating 308 can include a plurality of grating lines or ridges 310, which can be shaped or curved, for example, as elliptical, parabolic, or circular arcs. The lines or ridges 310 are separated by trenches formed into the surface of the chip on which the first grating coupler 302 is fabricated. In some implementations, the first grating 308 can include a plurality of periodically spaced regions of like optical index that are not necessarily separated by trenches. In some implementations, the first grating 308 can be considered to act as an optical antenna, which directs or guides a light beam incident on the first grating 308 towards the narrow end of the first horn section 304 and into the waveguide 306.

In some implementations, the values of the dimensions of the first horn section 304 can be selected based on the MFD of the incident beam. A beam size of the first horn section 304, as referred to herein, is defined as the size of the first grating 308 along an axis that is substantially perpendicular to the longitudinal axis, for example at about the midpoint of the length of the first grating 308 along the longitudinal axis of the first horn section 304. Note that the optimal position of the center of the beam does not need to coincide with the midpoint along the longitudinal axis of the grating. The optimal position strongly depends on the scattering strength of the grating. If the grating scatters strongly, the optimal position of the center of the beam will shift to the left; i.e., towards the narrow end of the first horn section. If the grating scatters weakly, it will shift to the right; i.e., towards the broad end of the first horn section. In some implementations, where the cross-section of the incident beam is substantially circular, the beam size of the first horn section 304 can be substantially equal to the length of the first grating 308 along the longitudinal axis of the first horn section 304. In some implementations, a beam size of the first horn section 304 can be made substantially equal to the MFD of the incident beam. In general, the dimensions of the first horn section 304 can be configured such that the light beam incident on the first grating 308 is tightly enclosed within the area of the first horn section 304 that includes the first grating 308. The first horn section 304 has a horn angle $h_1$ and a first grating distance $d_1$, which can represent the distance between the narrow end of the first horn section 304 and the first grating 308 along the longitudinal axis of the first horn section 304. In some implementations, the horn angle $h_1$ can be about 10° to about 14°, or about 12.7°, and the first grating distance $d_1$ can be about 23 $\mu$m to about 27 $\mu$m, or about 25 $\mu$m for an MFD of about 5 $\mu$m.

Referring to Figure 3B, the second grating coupler 352 includes a second horn section 354, having a narrow end and a broad end. The waveguide 306 can be coupled to the narrow end of the second horn section 354, while a second grating 358 can be formed at the broad end of the second horn section 354. The second grating 358 can include a plurality of grating lines or ridges 360, which can be shaped or curved, for example, as elliptical, parabolic, or circular arcs. The lines or ridges 360 are separated by trenches formed into the surface of the chip on which the first grating coupler 302 is fabricated. The shape of the second horn section 354 of the second grating coupler 352 is similar to the shape of the first horn section 304 of the first grating coupler 302 shown in Figure 3A. Moreover, the beam size of the second horn section 354 is also substantially equal to the MFD of the incident light beam. However, for the same MFD, the second horn section 354 differs from the first horn section 304 in the horn angle and the grating distance. For example, for the same MFD, the second horn angle $h_2$ is greater than the first horn angle $h_1$, and the second grating distance $d_2$ is less than the first grating distance $d_1$. For example, in some implementations, the second horn angle $h_2$ can be about 23° to about 27°, or about 25°, and the second grating distance $d_2$ can be about 10 $\mu$m to about 14 $\mu$m, or about 12.5 $\mu$m an MFD of about 5 $\mu$m.

It should be noted that the above mentioned values of the dimensions of first and the second grating couplers 302 and 352 are only examples. Other values of the dimensions of the grating couplers also can be selected. Generally, the dimensions of the horn sections of a grating coupler can be selected based on the following approximate relationship (Equation (1)) between the horn angle $h$, the grating distance $d$, and the MFD of the incident light beam as long as the beam size of the horn section is substantially equal to the MFD:

$$MFD \approx 2 \cdot d \cdot \tan(h/2) \qquad (1)$$

In some implementations, grating couplers having dimensions that satisfy Equation (1) can provide a relatively wide bandwidth for small MFD light beams. For example, light beams with MFD << 10 $\mu$m, for example, between about 3-7 $\mu$m or 4-6 $\mu$m, or equal to about 5 $\mu$m can provide relatively wide bandwidth. Therefore, such grating couplers are well suited for WDM applications, particularly when used in combination with optics that produce small MFD light beams (i.e., MFD << 10 $\mu$m, between about 3-7 $\mu$m or 4-6 $\mu$m, or equal to about 5 $\mu$m). In some implementations, these grating couplers with larger bandwidths can also provide lower sensitivity to process variations during the fabrication of the photonic chip on which the grating couplers are formed.

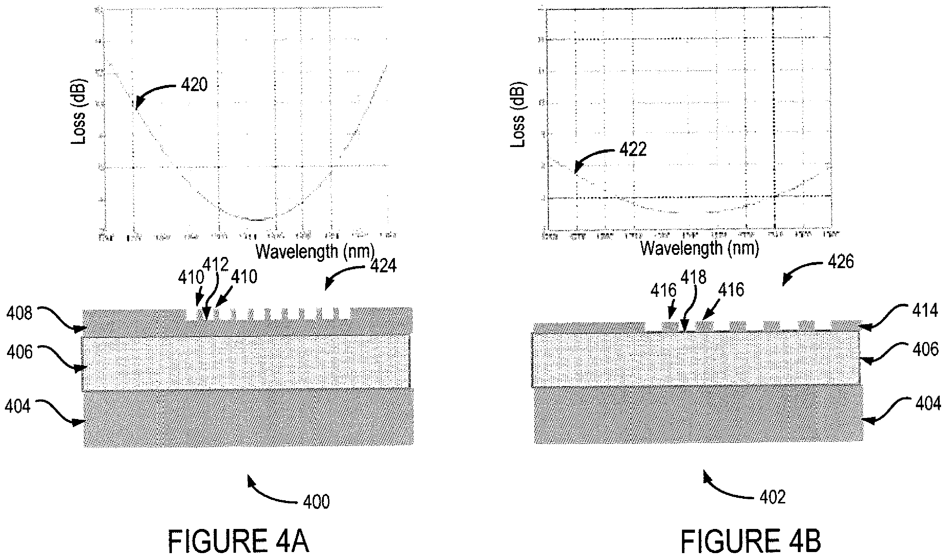

Figures 4A and 4B show cross-sectional views of photonic chips across example gratings that can be utilized in grating couplers. In particular, Figure 4A shows the cross-sectional view of a grating 424 utilized in a typical grating coupler, while Figure 4B shows the cross-sectional view of a wide-bandwidth grating 426 that can be utilized for one or more grating couplers discussed above (for example, in the grating couplers shown in Figures 1A, 3A, and 3B). Note that the grating from Figure 4A can also be used in a wide-bandwidth grating coupling. There are two mechanisms through which the bandwidth gets enhanced. The first mechanism is reduced beam size, the second mechanism is reduced silicon thickness. Both mechanisms may be combined. Figures 4A and 4B show silicon-on-insulator (SOI) chips 400 and 402, respectively, each of which can include a silicon handle or substrate 404 and a buried oxide layer 406 deposited over the silicon substrate 404. The SOI chip 400 differs from the SOI chip 402 at least in the thickness of their respective silicon layers deposited over the buried oxide layer 406. For example, the SOI 400 includes a thin silicon layer 408 that is patterned to form a grating 424 with ridges 410 separated by trenches 412. The SOI 402 also includes a thin silicon layer 414 that is patterned to form a wide-bandwidth grating 426 with ridges 416 separated by trenches 418. However, the thin silicon layer 414 of the SOI 402 is thinner than the thin silicon layer 408 of the SOI 400. In part due to the thinner silicon layer 414 on which the ridges 416 are formed, the ridges 416 provide a bandwidth that is wider than that provided by the ridges 410 formed on the typical SOI 400. For example, graphs 420 and 422 show the losses (in dB) in coupling light of various wavelengths associated with the ridges 410 and the ridges 416, respectively. As evident from graphs 420 and 422, for similar ranges of wavelengths, the magnitude of losses associated with the ridges 416 is less than that associated with ridges 410. Thus, the ridges 416 provide the grating 426 wider bandwidth than that provided by the typical ridges 410 of the grating 424.

In some implementations, the ridges 416 can be utilized as an alternative to the gratings shown in Figures 3A and 3B. In particular, the ridges 416 can be utilized incident light beams having standard MFDs of about 10 μm instead of relatively small MFDs of about 3-7 μm or 4-6 μm. Therefore, in some implementations, using the ridges 416 may alleviate the need for additional optical components that would otherwise be used to reduce the standard MFD of the light output by an optical fiber to a smaller MFD.

In some implementations, the thickness of the silicon layer 408 can be about 220 nm, while the thickness of the silicon layer 414 can be about 20-100 nm. In some implementations, the thickness of the silicon layer 414 can be about 50 nm. As an example, the thickness of the silicon layer 414 can be about five times smaller than the thickness of the silicon layer 410 used to form typical grating couplers. In some implementations, a pitch (the distance between the centers of two adjacent ridges) associated with the ridges 410 can be about 500 nm, while that of the ridges 416 can be about 960 nm. As an example, the grating pitch of the ridges 416 can be about twice the pitch of the typical ridges 410. In some implementations, the width of the trenches 412 can be about 250 nm, compared to the width of about 480 nm of the trenches 418. As an example, the width of the trenches 418 can be about twice the width of the trenches 412 of a typical grating coupler. The increase in the feature sizes of the ridges 416 and the trenches 418 relative to those of the ridges 410 and the trenches 412 can be beneficial for manufacturing as the larger feature sizes can relax the constraints on resolution of the lithographic process used for patterning the gratings.

In some implementations, gratings with thinner cross-section can be formed by locally thinning the portion of the horn section that includes the gratings. In some implementations, the fabrication process can include an additional process stage for performing this thinning. For example, the additional process stage can include an etching stage using a mask that isolates the etching to the portion of the horn section that includes the grating. In some implementations, the thickness of the horn section can gradually increase from the portion where the gratings are formed to the narrow end of the horn section. In some implementations, etching techniques including chemical etching or an-isotropic etching can be utilized. In some implementations, additional enhancements in the form of apodized gratings, reflectors at the bottom of the silicon layer 414, and a multilayer silicon layer 414 can be made.

While the grating couplers discussed above in relation to Figures 3A-4B also can be used for coupling light from a laser source to the photonic chip, in some implementations, grating couplers with different features may also be considered. For example, in some implementations, grating couplers with relatively larger beam size than the ones shown in Figures 3A and 3B can be utilized for coupling light from a laser onto a photonic chip. Such grating couplers can improve the alignment tolerance related to the alignment of the optical components to align the laser beam onto the gratings of the grating coupler. Moreover, as the larger beam size narrows the bandwidth of the grating coupler, such a grating coupler is well suited for coupling laser light, which has a relatively narrow bandwidth. In some implementations, the beam size of the grating coupler for coupling light from a laser source can be greater than about 15 μm. In some implementations, the beam size of the grating coupler for coupling light from a laser source can be about 20 μm to about 25 μm.

In some implementations, the MFD of the light beam generated by the laser can be substantially smaller than the beam size of the grating coupler. In some such implementations, magnifying optics can be utilized to increase the MFD of the light beam before it is incident on the grating coupler. Such magnifying optics can, for example, be housed in the laser source coupler 116 shown in Figure 1B.

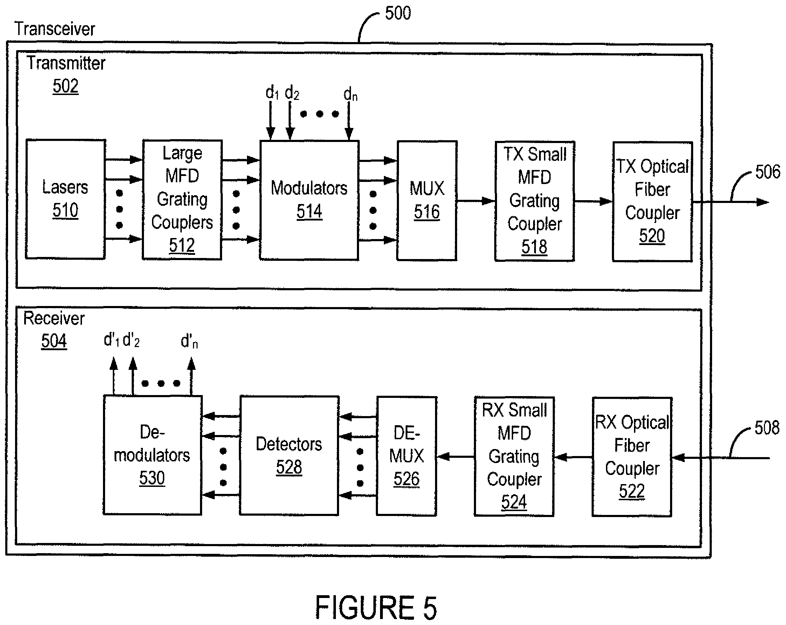

Figure 5 shows a block diagram of an example transceiver 500. In particular, the transceiver 500 can be implemented on one or more photonic chips such as the photonic chip 100 shown in Figures 1A and 1B. The transceiver 500 includes a transmitter 502 and a receiver 504. The transmitter 502 can be utilized for transmitting optical signal over a first optical fiber 506, while the receiver 504 can be utilized for receiving optical signals over a second optical fiber 508. The transmitter 502 can include one or more lasers 510, one or more large MFD grating couplers 512, one or more modulators 514, a multiplexer 516, a transmitter small MFD grating coupler 518, and a transmitter optical fiber coupler 520. The receiver 504 can include a receiver optical fiber coupler 522, one or more receiver small MFD grating couplers 524, one or more demultiplexers 526, one or more optical signal detectors 528, and one or more demodulators 530.

As mentioned above, the transmitter 502 can include one or more lasers 510. The lasers 510 can generate one or more optical signals having one or more wavelengths. In some implementations, the one or more lasers 510 can include or be part of a comb generator that can generate a plurality of equally spaced optical signals. In some implementations, the one or more lasers can be housed in laser source coupler 116, shown in Figure 1B. In some implementations, the housing can include optical components ensuring that the one or more optical signals are incident on the large MFD grating couplers 512 with the appropriate orientation. For example, the optical components can be arranged such that one laser light beam is incident on one of the plurality of large MFD grating couplers 512. The large MFD grating couplers 512 can include grating couplers that are configured to couple large MFD, narrow wavelength, light beams generated by the lasers 510 to various optical components on the photonic chip over which the couplers 512 are fabricated. In some implementations, each of the large MFD grating couplers 512 can be a low bandwidth grating coupler with relatively large (greater than about 10 μm) beam size for receiving a relatively large (greater than about 10 μm) MFD laser light beam. The large MFD grating couplers 512 can output light over a plurality of waveguides (not shown) to the modulators 514. In some implementations, the large grating couplers 114 shown in Figure 1 A can be utilized for implementing the large MFD grating couplers 512.

The modulators 514 can utilize the plurality of optical signals received from the large MFD grating couplers 512 as carrier signals, and modulate the carrier signals based on the data streams $d_1$ to $d_n$ to generate $n$ data signals. In some implementations, electro-optic modulators, such as, for example, Mach-Zehnder modulators (MZMs), can be utilized for modulating each of the carrier signals with a data signal. In some other implementations, one or more of the modulators 514 can include resonant ring oscillator-based modulators, or any other suitable optical or electro-optical modulator. In some implementations, modulators other than electro-optic modulators, such as, without limitation, acousto-optic modulators, magneto-optic modulators, mechano-optic modulators, thermo-optic modulators, or combinations thereof, also can be utilized. In some implementations, the modulators 514 can utilize techniques such as quadrature amplitude modulation (QAM) and phase shift keying (PSK) for modulating the carrier signals. Other types of modulation may be used. The data signals generated by the modulators 514 are fed to the multiplexer 516.

The multiplexer 516 can multiplex the n data signals provided by the modulators 514 into a single transmitter optical signal. In some implementations, the multiplexer 514 can be implemented using an optical signal combiner that combines the n data signals into the transmitter optical signal. In some implementations, the combiner can be a cascaded Mach-Zehnder filter. In some implementations, the combiner can be an Echelle grating. In some implementations, the combiner can be an arrayed waveguide grating. In some implementations, the combiner can be a dichroic combiner, which combines optical signals of different wavelengths into a single optical beam. In some implementations, an optical add-drop multiplexer can be utilized for combining the $n$ data signals and the pilot carrier signals into the transmitter optical signal 220. The multiplexer 516 outputs the transmitter optical signal to the transmitter small MFD grating coupler 518.

The transmitter small MFD grating coupler 518 couples the transmitter optical signal received from the multiplexer 516 to the transmitter optical fiber coupler 520. The transmitter MFD grating coupler 518 can be similar to the grating couplers discussed above in relation to Figures 3A, 3B, and 4B. As discussed above, the grating couplers shown in Figure 3A, 3B, and 4B provide a large bandwidth that is suitable for coupling multiplexed WDM signals between on-chip photonic components and optical fibers.

The transmitter optical fiber coupler 520 directs the transmitter optical signal received from the transmitter small MFD grating coupler 518 onto the first optical fiber 506. The transmitter optical fiber coupler 520 can include optical components such as reflectors, prisms, mirrors, lenses, isolators, etc., arranged in a manner such that the incident transmitter optical signal light beam is directed onto the first optical fiber 506 with appropriate incident angle. In some implementations, the transmitter optical fiber coupler 520 also can change the MFD of the transmitter optical signal light beam before it is transmitted over the first optical fiber 506. For example, the transmitter optical fiber coupler 520 may increase the MFD from between about 4-6 um, e.g., about 5 $\mu$m, to about 10 $\mu$m, or other standard MFDs appropriate for the particular first optical fiber 506. In some implementations, the first optical fiber coupler 202 (Figure 2A) or the second optical fiber coupler 204 (Figure 2B) can be utilized for implementing the transmitter optical fiber coupler 520.

The receiver 504 receives a receiver optical signal from the second optical fiber 508. In some implementations, the receiver optical signal can be a WDM signal that includes various optical signals of various wavelengths multiplexed into a single receiver optical signal light beam. The receiver optical fiber coupler 522 can direct the receiver optical signal light beam onto the receiver small MFD grating coupler 524 at the appropriate angle. The receiver optical fiber coupler 522 may also change the MFD of the receiver optical signal beam. For example, the MFD can be changed from 10 $\mu$m to between about 3-7 $\mu$m, or 4-6 $\mu$m; e.g., about 5 $\mu$m. Generally, the receiver optical fiber coupler 522 can be configured to change the MFD of the receiver optical signal to be substantially equal to a beam size of the receiver small MFD grating coupler 524. In some implementations, the first optical fiber coupler 202 (Figure 2A) or the second optical fiber coupler 204 (Figure 2B) can be utilized for implementing the receiver optical fiber coupler 522.

The receiver small MFD grating coupler 524 can couple the receiver optical signal light beam with various optical components on the photonic chip over which the grating coupler 524 is fabricated. In particular, the grating coupler 524 can direct the incident receiver optical signal light beam to a demultiplexer 526 over a waveguide (not shown). Grating couplers such as those discussed above in relation to Figures 3A, 3B, and 4B can be utilized for implementing the receiver small MFD grating coupler 524. As discussed above, the grating couplers shown in Figures 3A, 3B, and 4B exhibit wide bandwidth and are well suited for WDM applications.

The demultiplexer 526 demultiplexes the WDM optical signals in the receiver optical signal light beam into n data signals. The demultiplexing techniques utilized by the demultiplexer 526 can complement the multiplexing techniques used at a transmitter to multiplex the $n$ data signals. In some implementations, an arrayed waveguide grating (AWG) can be utilized for demultiplexing receiver optical signal. In some implementations, the demultiplexer can be a cascaded Mach-Zehnder filter. In some implementations, the demultiplexer can be an Echelle grating. In some other implementations, a reconfigurable optical add-drop demultiplexer can be utilized for demultiplexing the receiver optical signal. The demultiplexer 526 outputs the demultiplexed n data signals to the detectors 528, which can detect and convert the n data signals from the optical domain to the electrical domain. In some implementations, the detectors 528 can include photodiodes that output an electrical signal that is proportional to the intensity of the incident optical signal. The detector 528 can provide the n electrical data signals to the demodulators 530. The demodulators 530 can demodulate the data signals received from the detector 328 into n data streams. In some implementations, the demodulator 530 can use demodulation techniques the complement the modulation techniques used at a transmitter to modulate the *n* data signals.

In some implementations, one or more components of the transceiver 500 can be fabricated on the same photonic chip. In some other implementations, various components of the transceiver 500 can be fabricated on separate photonic chips interconnected by waveguides.

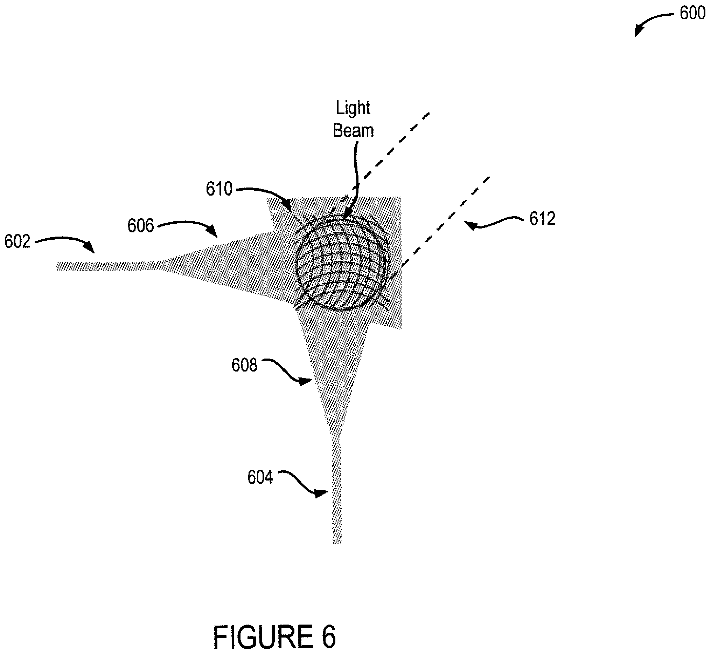

In some implementations, the selection of various dimensions of the gratings discussed above in relation to one-dimensional (1D)grating couplers also can be applied to selecting various dimensions of two-dimensional (2D) grating couplers and other advanced grating coupler designs to enhance optical bandwidth. Figure 6 shows a top view of an example 2D grating coupler 600. The 2D grating coupler 600 can act as a polarization-splitting grating coupler to receive two distinct optical signals having different polarizations from a single fiber. The 2D grating coupler 600 includes two waveguides 602 and 604, two horns 606 and 608 partially overlapping each other, and a 2D grating 610. The 2D grating 210 may consist of lines and ridges of various shapes, placed at the intersection of the ellipses or circles. These lines and ridges maybe etched, similar to the trenches in the 1D grating couplers described previously. The same techniques used to enhance the optical bandwidth of 1D grating couplers-i.e., a smaller beam size with similar distance *d* and horn angle *h,* and/or a thinner silicon layer with similar distance *d* and horn angle *h*-may be used to enhance the optical bandwidth of the 2D grating coupler. The 2D grating coupler can act as a polarization-splitting coupler to couple two distinct optical signals into the two waveguides 602 and 604. The specific state of polarization in the fiber determines how much light couples into each waveguide. In some implementations, the optical fiber can form a small angle with the normal to the plane of the grating coupler, along the direction indicated by dashed lines 612.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

Implementations described in this disclosure provide systems, methods, and apparatus for a photonic chip. The photonic chip includes one or more electronic components in addition to one or more optical components. Grating couplers can be utilized for coupling light incident from an optical fibers or lasers with the optical components on the photonic chip. The grating couplers can be designed to have a wide bandwidth to support applications such as wave division multiplexing (WDM). The wide bandwidth can be achieved by reducing a mode field diameter (MFD) of the light beams incident on the grating couplers, and selecting a beam size of the optical couplers to be substantially equal to MFD. The bandwidth can be further improved by using thin silicon layer for fabricating the ridges of the grating coupler. Grating couplers with relatively large beam sizes can be utilized for coupling light output by lasers with the optical components on the chip.

**Claims**

1. A photonic chip comprising:

   at least one optical component;
   a waveguide, one end of which is coupled to the at least one optical component;
   a grating coupler having a horn section with a narrow end and a broad end, wherein the narrow end is coupled to a second end of the waveguide and the broad end includes a grating portion having a plurality of ridges, the horn section having a beam size defined by a dimension in a plane of the horn section that is substantially perpendicular to a longitudinal axis of the horn section at a point along a length of the grating along the longitudinal axis; and
   an optical fiber coupler configured to direct a beam of light on the grating portion of the grating coupler at an angle in relation to a normal with respect to the plane of the grating coupler, wherein a mode field diameter of the beam of light is substantially equal to the beam size.

2. The photonic chip of claim 1, wherein the beam size is between about 3-7 $\mu$m; and wherein the beam size is preferably about 5 $\mu$m.

3. The photonic chip of claim 1 or 2, wherein the plurality of ridges are separated by trenches, and wherein the thickness of each of the plurality of ridges along an axis normal to the plane of the grating coupler is about 20-100 $\mu$m.

4. The photonic chip of claim 1 or 2, wherein the plurality of ridges are separated by trenches, and wherein the thickness of each of the plurality of ridges along an axis normal to the plane of the grating coupler is about 50 nm.

5. The photonic chip of one of claims 1 to 4, wherein the horn section is a first horn section, the waveguide is a first waveguide, and the grating coupler is a two-dimensional grating coupler comprising a second horn section with a second narrow end coupled to a second waveguide, the two-dimensional grating coupler configured to:

   receive the beam of light from the optical fiber coupler, the beam of light comprising a first optical signal having a first polarization and a second optical signal having a second polarization different from the first polarization;
   direct the first optical signal to the first waveguide; and
   direct the second optical signal to the second waveguide.

6. The photonic chip of one of claims 1 to 5, wherein the at least one optical component comprises one or more of an optical multiplexer, an optical demultiplexer, a modulator, or a photodetector.

7. A photonic chip comprising:

   at least one optical component;
   a waveguide, one end of which is coupled to the at least one optical component;
   a grating coupler having a horn section with a narrow end and a broad end, wherein the narrow end is coupled to a second end of the waveguide and the broad end includes a grating portion having a plurality of ridges, the horn section having a beam size defined by a dimension in a plane of the horn section that is substantially perpendicular to a longitudinal axis of the horn section at a point along a length of the grating coupler along the longitudinal axis; and
   a laser source coupler configured to direct a beam of light on the grating portion of the grating coupler at an angle in relation to a normal with respect to the plane of the grating coupler, wherein a mode field diameter of the beam of light is substantially equal to the beam size.

8. The photonic chip of claim 7, wherein the beam size is greater than about 15 $\mu$m; and
   wherein the beam size is preferably between about 20-25 $\mu$m.

9. The photonic chip of claim 7 or 8, wherein the plurality of ridges are separated by trenches, and wherein the thickness of each of the plurality of ridges along an axis normal to the plane of the grating coupler is about 20-100 $\mu$m.

10. The photonic chip of claim 7 or 8, wherein the plurality of ridges are separated by trenches, and wherein the thickness of each of the plurality of ridges along an axis normal to the plane of the grating coupler is about 50 nm.

11. The photonic chip of one of claims 7 to 10, wherein the at least one optical component comprises one or more of an optical multiplexer, an optical demultiplexer, a modulator, or a photodetector; and/or
    wherein the laser source coupler comprises magnifying optics configured to increase the mode field diameter of the beam of light before it is incident on the grating coupler.

12. A transceiver comprising:

    a first photonic chip section, comprising:

       a first optical component;
       a first waveguide having a first end coupled to the first optical component;
       a first grating coupler having a first horn section with a first narrow end and a first broad end, wherein the first narrow end is coupled to a second end of the first waveguide and the first broad end includes a first grating portion having a first plurality of ridges, the first horn section having a first beam size defined by a dimension in a plane of the first horn section that is substantially perpendicular to a longitudinal axis of the first horn section at a point along a length of the first grating coupler along the longitudinal axis of the first horn section; and
       an optical fiber coupler configured to direct a first beam of light on the grating portion of the first grating coupler at an angle in relation to a normal with respect to the plane of the first grating coupler, wherein a mode field diameter of the first beam of light is substantially equal to the first beam size;

    a second photonic chip section, comprising:

a second optical component;

a second waveguide having a first end coupled to the second optical component;

a second grating coupler having a second horn section with a second narrow end and a second broad end, wherein the second narrow end is coupled to a second end of the second waveguide and the second broad end includes a second grating portion having a second plurality of ridges, the second horn section having a second beam size defined by a dimension in a plane of the second horn section that is substantially perpendicular to a longitudinal axis of the second horn section at a point along a length of the second grating coupler along the longitudinal axis of the second horn section; and

a laser source coupler including second optical components configured to direct a second beam of light on the grating portion of the second grating coupler at an angle in relation to a normal with respect to the plane of the second grating coupler, wherein a mode field diameter of the second beam of light is substantially equal to the second beam size.

13. The transceiver of claim 12, wherein the first beam size is between about 3-7 $\mu$m; and/or wherein the second beam size is greater than about 15 $\mu$m.

14. The transceiver of claim 12 or 13, wherein the laser source comprises one or more lasers operative to produce outputs having wavelengths of one or more of 1271 nm, 1291 nm, 1311 nm, 1331 nm, or 1550 nm.

15. The transceiver of one of claims 12 to 14, wherein the laser source coupler comprises magnifying optics configured to increase the mode field diameter of the second beam of light before it is incident on the second grating coupler; and/or

wherein the first optical component or the second optical component comprises one or more of an optical multiplexer, an optical demultiplexer, a modulator, or a photodetector.

FIGURE 1A

FIGURE 1B

EP 3 173 833 A1

prism/
reflector 208 206

lens

202

fiber 210

212

grating coupler

## FIGURE 2A

prism with
lenses 216

214

204

fiber 210

216

212

grating coupler

## FIGURE 2B

Beam
Size

Light
Beam

$d_1$

$h_1$

302

306

Longitudinal Axis

308

304

FIGURE 3A

Light
Beam

Beam
Size

$d_2$

$h_2$

352

306

Longitudinal Axis   358

354

FIGURE 3B

Loss (dB)

Wavelength (nm)

422

426

414

406

404

416 418 416

402

**FIGURE 4B**

Loss (dB)

Wavelength (nm)

420

424

410 412 410

408

406

404

400

**FIGURE 4A**

FIGURE 5

600

612

Light
Beam

610

606

602

608

604

FIGURE 6

Europäisches
Patentamt
European
Patent Office
Office européen
des brevets

**EUROPEAN SEARCH REPORT**

Application Number

EP 16 19 9715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/215046 A1 (MEKIS ATTILA [US] ET AL) 30 July 2015 (2015-07-30) <br> * paragraphs [0031], [0037], [0090]; figures 1A-1C,3,13 * | 1-15 | INV. <br> G02B6/30 <br> G02B6/34 <br> G02B6/124 <br> H04B10/40 |
| A | ARAMAIS ZAKHARIAN ET AL: "Grating-based Fiber-to-chip Coupling Efficiency for Small Mode Field Diameter Fibers", ADVANCED PHOTONICS 2013, 1 January 2013 (2013-01-01), page JT3A.9, XP055364781, Washington, D.C. DOI: 10.1364/IPRSN.2013.JT3A.9 ISBN: 978-1-55752-981-7 <br> * the whole document * | 2,3,9,13 | ADD. <br> G02B6/12 <br> G02B6/126 <br> G02B6/42 |
| A | FREDERIK VAN LAERE ET AL: "Compact and Highly Efficient Grating Couplers Between Optical Fiber and Nanophotonic Waveguides", JOURNAL OF LIGHTWAVE TECHNOLOGY, IEEE SERVICE CENTER, NEW YORK, NY, US, vol. 25, no. 1, 1 January 2007 (2007-01-01), pages 151-156, XP011175494, ISSN: 0733-8724, DOI: 10.1109/JLT.2006.888164 <br> * the whole document * | 3,4,9,10 | TECHNICAL FIELDS SEARCHED (IPC) <br> G02B <br> H04B |
| A | WO 2008/122607 A1 (IMEC INTER UNI MICRO ELECTR [BE]; UNIV GENT [BE]; GENEXIS BV [NL]; ROE) 16 October 2008 (2008-10-16) <br> * abstract; claims 1-31 * | 6,11,15 | |

-/--

The present search report has been drawn up for all claims

| Place of search | Date of completion of the search | Examiner |
|---|---|---|
| The Hague | 19 April 2017 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 19 9715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JACOB S LEVY ET AL: "High efficiency grating coupler for 3 [mu]m SOI waveguides", GROUP IV PHOTONICS (GFP), 2012 IEEE 9TH INTERNATIONAL CONFERENCE ON, IEEE, 29 August 2012 (2012-08-29), pages 183-185, XP032456465, DOI: 10.1109/GROUP4.2012.6324127 ISBN: 978-1-4577-0826-8 * page 3, column 1, line 4 * ----- | 8,13 | |
| A | US 2007/092254 A1 (BOUDA MARTIN [US]) 26 April 2007 (2007-04-26) * paragraphs [0022], [0094], [0112] * ----- | 14 | |
| | | | TECHNICAL FIELDS SEARCHED (IPC) |

The present search report has been drawn up for all claims

| Place of search | Date of completion of the search | Examiner |
|---|---|---|
| The Hague | 19 April 2017 | Kapsalis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 16 19 9715

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2017

| Patent document cited in search report | | Publication date | Patent family member(s) | | Publication date |
|---|---|---|---|---|---|
| US 2015215046 | A1 | 30-07-2015 | NONE | | |
| WO 2008122607 | A1 | 16-10-2008 | CA | 2682810 A1 | 16-10-2008 |
| | | | CN | 101720443 A | 02-06-2010 |
| | | | EP | 2000836 A1 | 10-12-2008 |
| | | | EP | 2140295 A1 | 06-01-2010 |
| | | | JP | 2010524022 A | 15-07-2010 |
| | | | US | 2010119229 A1 | 13-05-2010 |
| | | | WO | 2008122607 A1 | 16-10-2008 |
| US 2007092254 | A1 | 26-04-2007 | US | 2007092254 A1 | 26-04-2007 |
| | | | WO | 2007142676 A1 | 13-12-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62261246 A **[0001]**
- US 35465516 A **[0001]**